# EUROPEAN PATENT APPLICATION

(11) **EP 2 611 006 A2**
(43) Date of publication of application: **03.07.2013**
(21) Application number: 12163780.5
(22) Date of filing: 11.04.2012
(51) Int. Cl.: H02K 11/00

(54) **Fan motor assembly**

(30) Priority: 29.12.2011 KR 20110146315
(71) Applicant: Samsung Electro-Mechanics Co., Ltd, Suwon Gyunggi-do 443-743 (KR)
(72) Inventor: Jang, Su Bong, 443-743 Gyunggi-do (KR); Bae, Han Kyung, 443-743 Gyunggi-do (KR); Yoon, Hee Soo, 443-743 Gyunggi-do (KR); Seok, Jin Su, 443-743 Gyunggi-do (KR); Lee, Sang Jong, 443-743 Gyunggi-do (KR); Yoon, Young Bok, 443-743 Gyunggi-do (KR); Yun, Tae Ho, 443-743 Gyunggi-do (KR)
(74) Representative: Heine, Christian Klaus

(57) **Abstract**

Disclosed herein is a fan motor assembly. A motor includes a rotor unit and a stator unit. An impeller is provided on an upper end of a motor shaft of the motor. The impeller is rotated by the motor to suck air. The impeller includes a pair of plates that face each other, and a plurality of blades that are disposed between the plates at positions spaced apart from each other at regular intervals. A diffuser is disposed around an outlet formed in a periphery of the impeller. A motor housing encases the rotor unit and the stator unit therein. A sensing unit is provided on a lower end of the motor shaft that extends outwards from the motor housing. The sensing unit senses the rotation of the rotor unit. An inductor is installed in the motor housing.

## Description

### CROSS REFERENCE TO RELATED APPLICATION

This application claims the benefit of Korean Patent Application No. 10-2011-0146315, filed Dec. 29, 2011, entitled "FAN MOTOR ASSEMBLY", which is hereby incorporated by reference in its entirety into this application.

### BACKGROUND OF THE INVENTION

### 1. Technical Field

The present invention relates to a fan motor assembly.

### 2. Description of the Related Art

Generally, fan motor assemblies used in vacuum cleaners make use of switched reluctance motors (SRMs). Such a fan motor assembly includes a stator unit and a rotor unit. The stator unit includes a stator yoke and a plurality of stator salient poles which protrude from the stator yoke. The rotor unit includes a rotor core and a plurality of rotor salient poles which protrude from the rotor core. The rotor unit is rotatably received in the stator unit.

Furthermore, the fan motor assembly according to the conventional technique includes an inductor along with a controller. As is well known, the inductor is provided on a path along which current passes from an AC (alternating current) terminal, and carries current such that harmonics of supply AC can be restrained, thus improving the power factor of the controller.

The conventional fan motor assembly having the above-mentioned construction can be used in an electric appliance such as a vacuum cleaner. As stated above, the fan motor assembly along with the controller and the inductor must be installed in a limited space in the vacuum cleaner.

Recently, a lot of effort has been put into reducing the size of fan motor assemblies installed in vacuum cleaners. In this regard, the reason for this is because it is very difficult for the conventional fan motor assembly along with additional accessories to be installed in a vacuum cleaner.

(Patent Document 1) Korean Patent Registration No. 10-1006589

### SUMMARY OF THE INVENTION

The present invention has been made in an effort to provide a fan motor assembly which is provided with an inductor.

In a fan motor assembly according to a first embodiment of the present invention, a motor includes a rotor unit and a stator unit. An impeller is provided on an upper end of a motor shaft of the motor and is rotated by the motor to suck air. The impeller includes a pair of plates facing each other and a plurality of blades disposed between the plates at positions spaced apart from each other at regular intervals. A diffuser is disposed around an outlet formed in a periphery of the impeller. A motor housing encases the rotor unit and the stator unit therein. A sensing unit is provided on a lower end of the motor shaft that extends outwards from the motor housing. The sensing unit senses the rotation of the rotor unit. An inductor is installed in the motor housing.

In this embodiment, the inductor may be disposed on a bottom plate of the motor housing.

The inductor may comprise a toroidal inductor. In addition, the inductor may be embodied by different types of inductors.

The rotor unit may be disposed on the motor shaft at a position spaced apart from the bottom plate of the motor housing by a predetermined distance. This distance may be greater than the height of the inductor to prevent the inductor from coming into contact with the rotor unit.

The sensing unit may be received in a concave chamber formed in a central portion of the bottom plate of the motor housing.

The rotor unit may include a rotor core fastened at a central portion thereof to the motor shaft, and a plurality of rotor salient poles protruding from a circumferential outer surface of the rotor core. The stator unit may include a stator yoke in which the rotor unit is rotatably received, and a plurality of stator salient poles protruding from the stator yoke towards the rotor salient poles and corresponding to the rotor salient poles, with a coil wound around the stator salient poles.

In a fan motor assembly according to a second embodiment of the present invention, a motor includes a rotor unit and a stator unit. An impeller is provided on an upper end of a motor shaft of the motor so that the impeller is rotated by the motor to suck air. The impeller includes a pair of plates facing each other and a plurality of blades disposed between the plates at positions spaced apart from each other at regular intervals. A diffuser is disposed around an outlet formed in a periphery of the impeller. A motor housing encases the rotor unit and the stator unit therein. A sensing unit is provided on a lower end of the motor shaft that extends outwards from the motor housing. The sensing unit senses the rotation of the rotor unit. An inductor is mounted under a bottom plate of the motor housing.

In this embodiment, the inductor may comprise a toroidal inductor.

The inductor may be arranged along a periphery of the bottom plate of the motor housing.

The sensing unit may be received in a concave chamber formed in a central portion of the bottom plate of the motor housing so that the sensing unit can be protected from external forces.

The rotor unit may include a rotor core fastened at a central portion thereof to the motor shaft, and a plurality of rotor salient poles protruding from a circumferential outer surface of the rotor core. The stator unit may include a stator yoke in which the rotor unit is rotatably received, and a plurality of stator salient poles protruding from the stator yoke towards the rotor salient poles and corresponding to the rotor salient poles, with a coil wound around the stator salient poles.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a sectional view illustrating a fan motor assembly according to a first embodiment of the present invention;
FIG. 2 is a partially broken perspective view of the fan motor assembly of FIG. 1;
FIG. 3 is a sectional view illustrating a fan motor assembly according to a second embodiment of the present invention; and
FIG. 4 is a partially broken perspective view of the fan motor assembly of FIG. 3.

### DESCRIPTION OF THE PREFERRED EMBODIMENTS

Hereinafter, a fan motor assembly of the present invention will be described in detail with reference to the attached drawings.

Reference now should be made to the drawings, in which the same reference numerals are used throughout the different drawings to designate the same or similar components. If in the specification, detailed descriptions of well-known functions or configurations may unnecessarily make the gist of the present invention obscure, the detailed descriptions will be omitted. The terms and words used in the present specification and the accompanying claims should not be limitedly interpreted as having their common meanings or those found in dictionaries, but should be interpreted as having meanings adapted to the technical spirit of the present invention on the basis of the principle that an inventor can appropriately define the concepts of terms in order to best describe his or her invention.

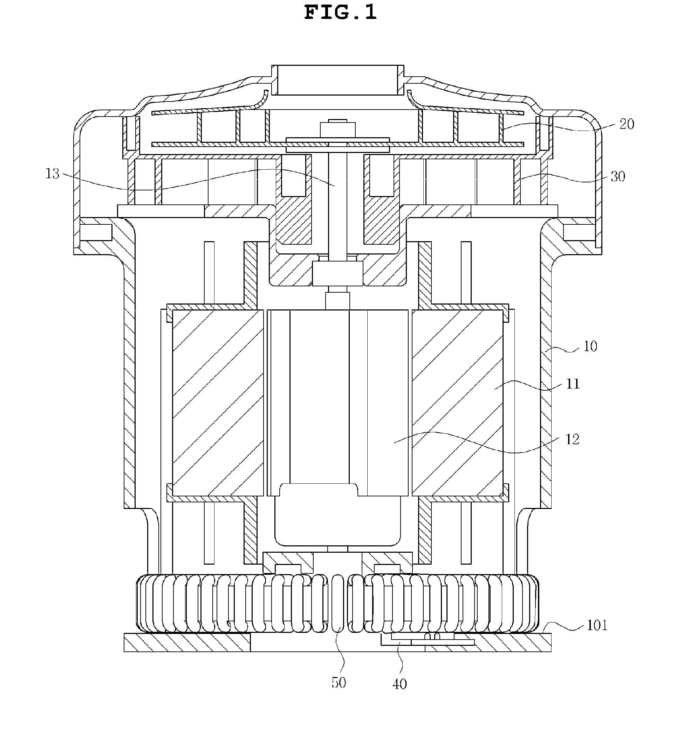

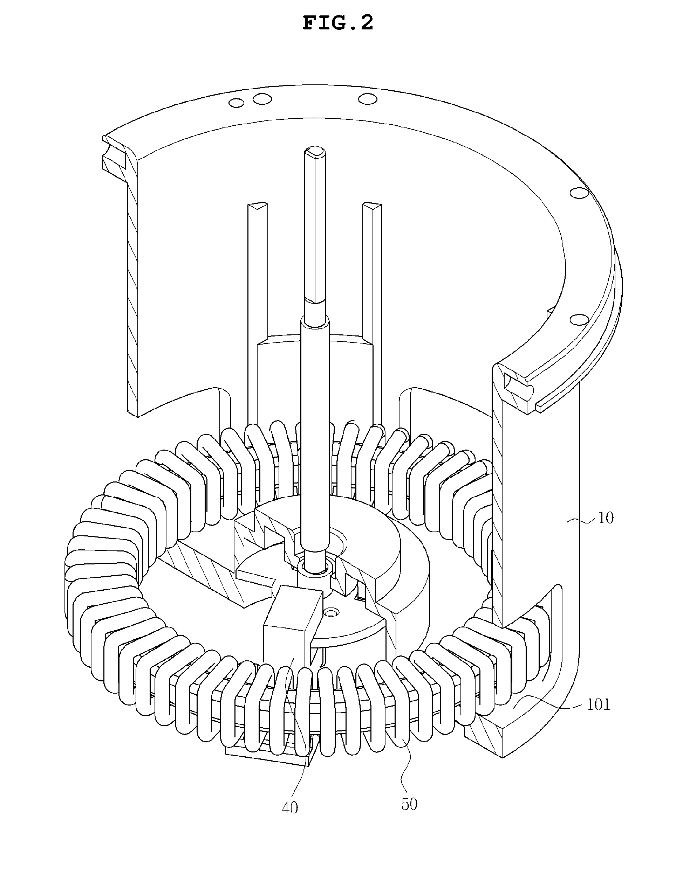

FIG. 1 is a sectional view illustrating a fan motor assembly according to a first embodiment of the present invention. FIG. 2 is a partially broken perspective view of the fan motor assembly of FIG. 1. FIG. 2 illustrates only a motor housing, an inductor and a motor shaft to more clearly show the gist of the present invention.

As shown in the drawings, the fan motor assembly according to the first embodiment of the present invention includes a stator unit 11 and a rotor unit 12. The rotor unit 12 is fixed to the motor shaft 13 to rotate along with the motor shaft 13. The rotation of the rotor unit 12 is transmitted to the motor shaft 13, thus causing the rotational operation of the fan motor assembly.

The stator unit 11 includes a stator yoke and a plurality of stator salient poles which protrude from the stator yoke. The rotor unit 12 includes a rotor core and a plurality of rotor salient poles which protrude from the rotor core. The rotor unit 12 is rotatably received in the stator unit 11.

As is well known, an impeller 20 is coupled to an upper end of the motor shaft 13. Thus, the rotation of the rotor unit 12 is transmitted to the impeller 20 coupled to the motor shaft 13. The rotation of the impeller 20 generates centrifugal force outwards from the periphery of the impeller 20 so that the fan motor assembly sucks air from the outside and discharges air outwards from the periphery of the impeller 20.

The impeller 20 is configured such that it rotates at high speed and sucks the outside air. For this, the impeller 20 includes upper and lower plates which are coaxial with the motor shaft 13 and are spaced apart from each other by a predetermined distance, and a plurality of blades which are provided between the upper and lower plates and extend in the radial direction. An air inlet passage is formed in a central portion of the upper plate of the impeller 20 so that air is drawn into the impeller 20 through the air inlet passage when the impeller 20 rotates.

A diffuser 30 is disposed around the impeller 20 and spaced apart from the outer surface by a predetermined distance to allow the impeller 20 to rotate. The diffuser 30 guides air, which has been drawn into an inlet port of the fan motor assembly by the rotation of the impeller 20 at high speed, towards the interior of the fan motor assembly.

In addition, the fan motor assembly according to the present invention further includes a sensing unit 40 which senses the rotation of the rotor unit 12.

The sensing unit 40 includes a sensor and a sensor disk. The sensing unit 40 is disposed outside a housing 10 which encases the fan motor assembly. The sensor disk is coupled to a lower end of the motor shaft 13 and has the same shape as that of the rotor salient poles of the rotor unit 12. The sensor disk is maintained in the same arrangement as that of the rotor salient poles that are coupled to the motor shaft 13.

Thereby, the sensor disk rotates at the same speed as that of the rotor salient poles of the rotor unit 12. The sensor senses the rotation of the sensor disk, thus determining the rotational characteristics of the rotor unit 12.

The fan motor assembly according to the present invention is configured such that the interior of the motor housing 10 is separated from the sensing unit 40.

As shown in the drawings, the motor housing 10 includes a bottom plate 101 that has a chamber therein. The sensing unit 40 is installed in the chamber.

The chamber forms a concave inner space in the bottom plate of the motor housing 10 around the motor shaft 13. In an embodiment, the chamber may have a cylindrical shape in consideration of a radius of rotation of the sensor disk fastened to the motor shaft 13.

Therefore, the sensing unit 40 is prevented from protruding outwards from the fan motor assembly, so that not only the size of the fan motor assembly can be reduced but the sensing unit 40 that is sensitive can also be protected from external forces.

The fan motor assembly according to the present invention is **characterized in that** the inductor 50 is installed therein.

In the first embodiment, the inductor 50 is disposed in the inner space of the fan motor assembly. It is preferable for the inductor 50 to be attached to an upper surface of the bottom plate 101 of the motor housing 10 of the fan motor assembly.

To prevent the rotor unit 12 from colliding with the bottom plate 101 of the motor housing 10, the fan motor assembly is generally configured such that the rotor unit 12 fastened to the motor shaft 13 is disposed at a position spaced apart from the motor housing 10 by a predetermined distance.

In this embodiment, because the inductor 50 is disposed in a space between the bottom plate 101 of the motor housing 10 and the rotor 12, the presence of the inductor 50 does not affect the size of the fan motor assembly. In other words, the size of the fan motor assembly can be the same as that of the conventional fan motor assembly.

The use of the fan motor assembly having the above-mentioned construction and characteristics can be optimized, for example, even in the limited inner space of a vacuum cleaner.

In an embodiment, the inductor 50 may comprise a toroidal inductor. However, the inductor 50 is not limited to the toroidal type, and different kinds of inductors may be used.

Furthermore, the toroidal inductor 50 can be attached on the upper surface of the bottom plate 101 of the motor housing 10 by a variety of methods, for example, a bonding method. When the fan motor assembly is rotating, if the inductor 50 is removed from the motor housing 10, it may collide with the rotor unit 12 that is rotating at high speed, causing damage to the fan motor assembly. Thus, to avoid this event, the inductor 50 must be reliably fastened to the bottom plate 101 of the motor housing 10.

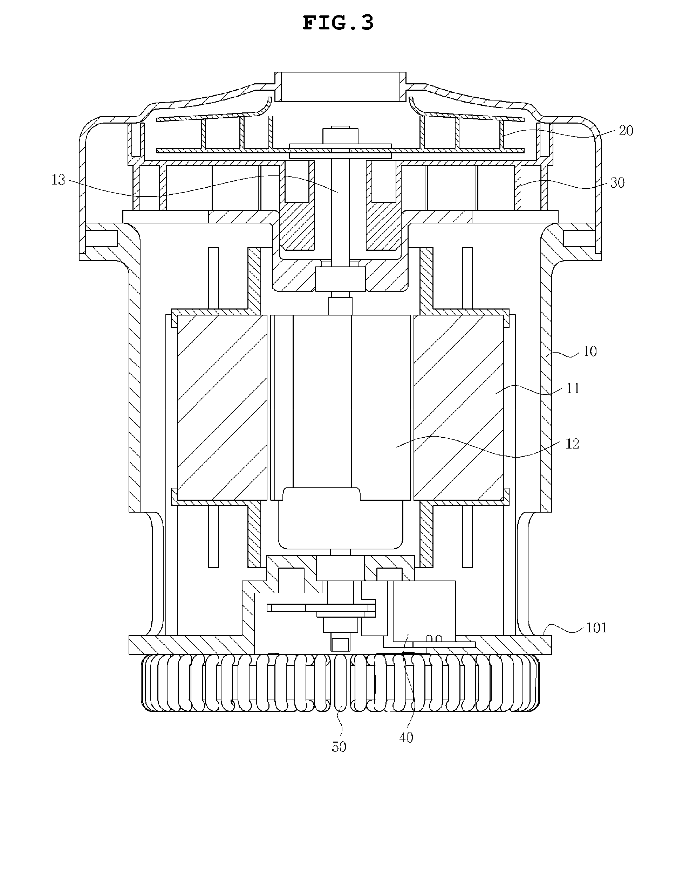

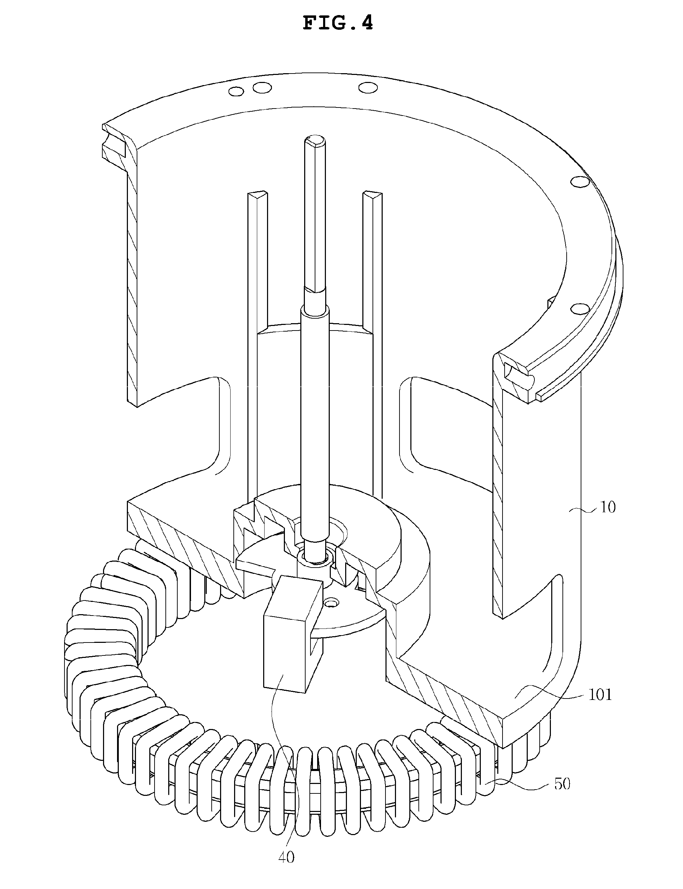

FIG. 3 is a sectional view illustrating a fan motor assembly according to a second embodiment of the present invention. FIG. 4 is a partially broken perspective view of the fan motor assembly of FIG. 3. FIG. 4 illustrates only a motor housing, an inductor and a motor shaft to more clearly show the gist of the present invention.

As shown in the drawings, a fan motor assembly according to the second embodiment of the present invention includes the motor housing 10, an impeller 20, a diffuser 30, a sensing unit 40 and the inductor 50. The motor housing 10 contains a stator unit 11 and a rotor unit 12.

The general construction of the fan motor assembly of FIG. 3 according to the second embodiment of the present invention, with the exception of the arrangement of the inductor 50, is similar to that of the fan motor assembly of FIG. 1 according to the first embodiment. Therefore, explanation of similar or the same components as those of the first embodiment will be skipped to facilitate understanding of the present invention.

In the fan motor assembly of this embodiment, the sensing unit 40 is separated from the interior of the motor housing 10 that contains the stator unit 11 and the rotor unit 12 therein.

The sensing unit 40 is received in a chamber formed in a bottom plate of the motor housing 10 so that the sensing unit 40 can be protected from external forces. For instance, the chamber has a hollow cylindrical shape that does not interference with the radius of rotation of the sensor disk of the sensing unit 40.

Unlike the first embodiment, the fan motor assembly according to the second embodiment of the present invention is **characterized in that** the inductor 50 is mounted to the outer surface of the motor housing.

In the second embodiment, the inductor 50 is mounted to the motor housing of the fan motor assembly and, more desirably, attached under a lower surface of the bottom plate 101 of the motor housing 10 of the fan motor assembly.

Because the inductor 50 is attached under the bottom plate 101 of the motor housing 10, unlike the conventional technique, a separate space or bracket for installation of the inductor, for example, in a vacuum cleaner, is not required.

The use of the fan motor assembly having the above-mentioned construction and characteristics can be optimized, for example, even in the limited inner space of a vacuum cleaner.

In the embodiment, the inductor 50 may comprise a toroidal inductor. However, the inductor 50 is not limited to the toroidal type, and different kinds of inductors may be used.

Furthermore, the toroidal inductor 50 can be attached under the lower surface of the bottom plate 101 of the motor housing 10 by a variety of methods, for example, a bonding method. Particularly, because the toroidal inductor 50 can be disposed without overlapping the sensing unit 40 that is disposed in the central portion of the fan motor assembly, even if the sensing unit 40 malfunctions and requires to replacement, a worker can easily access the sensing unit 40 without removing the inductor 50 from the fan motor assembly.

Alternatively, the toroidal inductor 50 may be arranged along the periphery of the bottom plate of the cylindrical motor housing 10 and spaced apart from the sensing unit 40 by a predetermined distance.

As stated above, the present invention is characterized by the structure of the fan motor provided with the inductor. Particularly, in the first embodiment of the present invention, the inductor is installed in the fan motor assembly. In the second embodiment of the present invention, the inductor is provided on the outer surface of the fan motor assembly, in detail, under the bottom plate. Furthermore, the present invention is not limited to these embodiments. For example, depending on the capacity of the fan motor assembly, the fan motor assembly may be provided with a plurality of inductors, derived from the combination of the first and second embodiments of the present invention.

As described above, the present invention provides a fan motor assembly provided with an inductor.

The present invention does not require a special design of the fan motor assembly for installation of the inductor in the fan motor assembly.

The present invention has a reduced installation space and can be easily applied even in a restrictive space, for example, a limited space in a vacuum cleaner.

Furthermore, in the present invention, the inductor can be installed merely by attaching it to the fan motor assembly without making use of a separate structure such as a bracket or the like. Therefore, the production cost of the fan motor assembly and labor required to manufacture it can be reduced.

Although the embodiments of the present invention have been disclosed for illustrative purposes, it will be appreciated that the fan motor assembly according to the invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A fan motor assembly, comprising:
a motor comprising a rotor unit and a stator unit;
an impeller provided on an upper end of a motor shaft of the motor and rotated by the motor to suck air, the impeller comprising a pair of plates facing each other and a plurality of blades disposed between the plates at positions spaced apart from each other at regular intervals;
a diffuser disposed around an outlet formed in a periphery of the impeller;
a motor housing encasing the rotor unit and the stator unit therein;
a sensing unit provided on a lower end of the motor shaft that extends outwards from the motor housing, the sensing unit sensing the rotation of the rotor unit; and
an inductor installed in the motor housing.

2. The fan motor assembly as set forth in claim 1, wherein the inductor is disposed on a bottom plate of the motor housing.

3. The fan motor assembly as set forth in claim 1, wherein the inductor comprises a toroidal inductor.

4. The fan motor assembly as set forth in claim 1, wherein the rotor unit is disposed on the motor shaft at a position spaced apart from the bottom plate of the motor housing by a predetermined distance.

5. The fan motor assembly as set forth in claim 1, wherein the sensing unit is received in a chamber formed in a central portion of the bottom plate of the motor housing.

6. The fan motor assembly as set forth in claim 1, wherein the rotor unit comprises: a rotor core fastened at a central portion thereof to the motor shaft; and a plurality of rotor salient poles protruding from a circumferential outer surface of the rotor core, and the stator unit comprises: a stator yoke in which the rotor unit is rotatably received; and a plurality of stator salient poles protruding from the stator yoke towards the rotor salient poles and corresponding to the rotor salient poles, with a coil wound around the stator salient poles.

7. The fan motor assembly as set forth in claim 1, further comprising
an inductor provided under the bottom plate of the motor housing.

8. A fan motor assembly, comprising:
a motor comprising a rotor unit and a stator unit;
an impeller provided on an upper end of a motor shaft of the motor so that the impeller is rotated by the motor to suck air, the impeller comprising a pair of plates facing each other and a plurality of blades disposed between the plates at positions spaced apart from each other at regular intervals;
a diffuser disposed around an outlet formed in a periphery of the impeller;
a motor housing encasing the rotor unit and the stator unit therein;
a sensing unit provided on a lower end of the motor shaft that extends outwards from the motor housing, the sensing unit sensing the rotation of the rotor unit; and
an inductor mounted under a bottom plate of the motor housing.

9. The fan motor assembly as set forth in claim 8, wherein the inductor comprises a toroidal inductor.

10. The fan motor assembly as set forth in claim 8, wherein the inductor is arranged along a periphery of the bottom plate of the motor housing.

11. The fan motor assembly as set forth in claim 8, wherein the sensing unit is received in a chamber formed in a central portion of the bottom plate of the motor housing.

12. The fan motor assembly as set forth in claim 8, wherein the rotor unit comprises: a rotor core fastened at a central portion thereof to the motor shaft; and a plurality of rotor salient poles protruding from a circumferential outer surface of the rotor core, and the stator unit comprises: a stator yoke in which the rotor unit is rotatably received; and a plurality of stator salient poles protruding from the stator yoke towards the rotor salient poles and corresponding to the rotor salient poles, with a coil wound around the stator salient poles.

13. The fan motor assembly as set forth in claim 8, further comprising
a toroidal inductor provided on the bottom plate of the motor housing.
